# EUROPÄISCHE PATENTSCHRIFT

(11) **EP 3 119 933 B1**
(45) Veröffentlichungstag und Bekanntmachung des Hinweises auf die Patenterteilung: **22.12.2021**
(21) Anmeldenummer: 15711730.0
(22) Anmeldetag: 19.03.2015
(51) Int. Cl.: D04B 21/12

(54) **ABSTANDSGEWIRKE SOWIE VERFAHREN ZUR HERSTELLUNG EINES ABSTANDSGEWIRKES**
SPACER FABRIC AND METHOD OF MAKING SAME
ÉTOFFE DOUBLE PAROIS ET PROCÉDÉ POUR SON OBTENTION

(30) Priorität: 20.03.2014 DE 102014103861
(43) Veröffentlichungstag der Anmeldung: 25.01.2017
(73) Patentinhaber: Müller Textil GmbH, 51674 Wiehl-Drabenderhöhe (DE)
(72) Erfinder: MÜLLER, Frank, 51674 Wiehl (DE); MÜLLER, Stefan, 51674 Wiehl (DE)
(74) Vertreter: Lorenz, Bernd Ingo Thaddeus
(86) Internationale Anmeldenummer: PCT/EP2015/055815
(87) Internationale Veröffentlichungsnummer: WO 2015/140259

(56) Entgegenhaltungen:
- EP-A1- 1 680 982
- EP-A1- 1 860 218
- US-A1- 2002 016 119

## Beschreibung

Die Erfindung betrifft ein Abstandsgewirke mit einer ersten und einer zweiten flächigen Gewirkelage, die durch eingewirkte Abstandsfäden miteinander verbunden sind, wobei die erste Gewirkelage maschenbildende Maschenfäden aus thermoplastischem Kunststoff und nicht maschenbildende Zusatzfäden aus thermoplastischem Kunststoff aufweist. Gegenstand der Erfindung ist des Weiteren auch ein Verfahren zur Herstellung des Abstandsgewirkes.

Abstandsgewirke zeichnen sich durch einen leichten, luftdurchlässigen Aufbau aus, wobei Abstandsgewirke durch die zwischen den beiden Gewirkelagen verlaufenden Abstandsfäden in Richtung ihrer Dicke elastisch sind. Aufgrund dieser Eigenschaften können Abstandsgewirke als weiche, elastische und eine Luftzirkulation ermöglichende Schichten bei Matratzen, Polstermöbeln, Bekleidungsstücken oder Schuhen vorgesehen sein. Abstandsgewirke werden auch im Automobilbereich, beispielsweise für Klimasitze und Sitzbezüge eingesetzt, wobei Abstandsgewirke aufgrund ihrer Polstereigenschaften und des sehr guten Rückstellverhaltens eine gute Konturanpassung ermöglichen. Ein herkömmliches Abstandsgewirke ist aus der DE 90 16 062 U1 bekannt. Auch die EP 1 680 982 A1 beschreibt ein gattungsgemäßes Abstandsgewirke.

Trotz des an sich bereits sehr offenen, luftdurchlässigen Aufbaus eines Abstandsgewirkes besteht gerade bei einem Einsatz des Abstandsgewirkes zur Be- oder Entlüftung das Bestreben, die Luftdurchlässigkeit zwischen den Gewirkelagen bzw. die Luftführungseigenschaften zu verbessern.

Die Anwendungsmöglichkeiten von Abstandsgewirken sind aber nicht auf die Gebiete einer Belüftung und/oder elastischen Abstützung beschränkt. So ist es beispielsweise aus der WO 2012/139142 A1 bekannt, Abstandsgewirke bei Bahnschwellen zur Verbindung eines Betonkörpers mit einer Schwellensohle einzusetzen, wobei das Abstandsgewirke bei der Herstellung des Schwellenkörpers zum Teil in den Betonkörper sowie in die Schwellensohle eingebettet wird und damit eine besonders zuverlässige, dauerhafte Verbindung dieser beiden Elemente ermöglicht. Auch bei dieser Anwendung wird ausgenutzt, dass Abstandsgewirke eine relativ offene, luftige Struktur bei einer gleichzeitig hohen mechanischen Stabilität aufweisen.

Ein Abstandsgewirke mit Kanälen zwischen den Gewirkelagen ist aus der DE 10 2008 020 287 C5 bekannt. Um einerseits eine ausreichende Stauchhärte und Stabilität des Abstandsgewirkes und andererseits eine gleichmäßige, möglichst widerstandsfreie Verteilung von Luft zu ermöglichen, weist das Abstandsgewirke in der von Abstandsfäden zwischen den Gewirkelagen gebildeten Schicht sich kreuzende, schräg zur Produktionsrichtung verlaufende Kanäle auf. Das bekannte Abstandsgewirke hat sich in der Praxis bewährt und macht sich zu Nutze, dass durch die schräge Anordnung der Kanäle eine übermäßige Reduzierung der Stabilität vermieden wird.

Aus der EP 1 775 362 A1 ist ein Abstandsgewirke bekannt, bei dem in eine Produktionsrichtung verlaufende Kanäle dadurch gebildet werden, dass bei dem Wirkprozess mit einer Vielzahl parallel zueinander geführter Fäden ein Teil der Abstandsfäden weggelassen wird, so dass sich an diesen Fehlstellen in Produktionsrichtung verlaufende offene Kanäle ergeben. Die Festigkeit des Abstandsgewirkes ist jedoch an diesen in Produktionsrichtung verlaufenden Kanälen stark reduziert, weil das Abstandsgewirke dort ohne Stabilisierung ist, wobei auch die angrenzenden Bereiche nur begrenzt zu einer Tragfähigkeit beitragen können. Gerade auch in Querrichtung tritt durch die Kanäle eine sehr deutliche Schwächung auf, weil die in Produktionsrichtung verlaufenden Kanäle bei einem Druck in Querrichtung durch die Beweglichkeit der beiden Gewirkelagen vollständig kollabieren oder bei einem Zug in Querrichtung erheblich in die Breite gezogen werden können. Sowohl die Funktion des Abstandsgewirkes als auch die Handhabung bei der Verarbeitung werden dadurch erheblich beeinträchtigt.

Vergleichbare Einschränkungen gelten, wenn das Abstandsgewirke in Querrichtung verlaufende Kanäle aufweist, die beispielsweise dadurch erzeugt werden können, dass die Abstandsfäden an voneinander beabstandeten Maschenreihen in einer der Gewirkelagen in Produktionsrichtung geführt werden und dort zur Bildung eines Kanals keine Verbindung zwischen den beiden Gewirkelagen erfolgt.

Wie sich auch aus der EP 1 775 362 A1 ergibt, können bei den aus dem Stand der Technik bekannten Abstandsgewirken Längs- und Querkanäle zur Bildung von Gelenken vorgesehen sein, um beispielsweise zum Zwecke einer Konturanpassung ein Umknicken des Abstandsgewirkes zu ermöglichen. Der Kanal ist dann jedoch zusammengedrückt und steht nicht mehr zum Fluidtransport zur Verfügung.

Aus der DE 199 31 193 C2 ist ein Abstandsgewirke zur Polsterung bekannt, welches Bereiche unterschiedlicher Luftdurchlässigkeit aufweist. Bei einer gleichmäßigen Struktur der Abstandsfäden soll eine unterschiedliche Dichte des Materials erreicht werden, was mit einem erheblichen konstruktiven Aufwand verbunden ist. Um eine der Gewirkelagen luftundurchlässig auszugestalten, kann diese mit einer Folie versehen werden. Alternativ ist es auch möglich, einen Schmelzfaden einzuarbeiten und diesen dann zur Bildung einer geschlossenen Schicht aufzuschmelzen. Eine gezielte Steuerung von Luft innerhalb des Abstandsgewirkes durch die Ausbildung von durchgehenden Kanälen ist nicht beschrieben und steht auch dem Ansatz einer lokal unterschiedlichen Luftdurchlässigkeit entgegen.

Aus den Druckschriften DE 10 2006 004 914 B4 und DE 10 2009 013 253 A1 ist der Einsatz von unter Wärmeeinwirkung aufschmelzenden Fäden zwischen den beiden flächigen Gewirkelagen eines Abstandsgewirkes bekannt.

Gemäß der DE 10 2006 004 914 B4 soll eine Versteifung des Materials dadurch erfolgen, dass die Abstandsfäden zum Teil miteinander verschmolzen sind. Durch diese Maßnahmen wird die Stauchhärte des Abstandsgewirkes erhöht, wobei die Dehnbarkeit in Produktionsrichtung sowie in Querrichtung weiterhin hoch bleibt.

Gemäß der DE 10 2009 013 253 A1 wird eine zusätzliche Schicht zwischen den beiden Gewirkelagen vorgesehen, die sich nur über einen Teil des Abstandes zwischen den Gewirkelagen erstreckt und damit ein zweistufiges elastisches Verhalten ermöglicht.

Bei den bekannten Abstandsgewirken besteht nicht nur das Problem, dass das Abstandsgewirke durch die Ausbildung von Kanälen in einem gewissen Maße geschwächt werden kann. Nachteilig ist auch, dass die bekannten Abstandsgewirke auch ohne Kanäle zwischen den Gewirkelagen in der Ebene - also in der Regel sowohl in Produktions- als auch in Querrichtung - eine gewisse Dehnbarkeit aufweisen. Bei dem Zuschnitt muss die Dehnung entsprechend berücksichtigt werden. Darüber hinaus werden bei einem Zuschneiden des Abstandsgewirkes auch zum Teil kurze Schlaufen abgetrennt, die sich dann von dem Zuschnitt lösen und die Umgebung verschmutzen. Wenn also ein Zuschnitt des Abstandsgewirkes erst bei einem Endkunden unmittelbar vor der Weiterverarbeitung erfolgt, muss die beschriebene Verunreinigung dort in Kauf genommen werden.

Der vorliegenden Erfindung liegt die Aufgabe zugrunde, die beschriebenen Nachteile zu verringern. Insbesondere soll ein Abstandsgewirke angegeben werden, welches bei der Weiterverarbeitung leichter gehandhabt werden kann und insbesondere auch eine reduzierte Dehnbarkeit in Längs- und Querrichtung aufweist. Schließlich soll auch ein Verfahren zur Herstellung des Abstandsgewirkes angegeben werden.

Gegenstand der Erfindung und Lösung der Aufgabe ist ein Abstandsgewirke gemäß Patentanspruch 1.

Ausgehend von einem Abstandsgewirke mit den eingangs beschriebenen Merkmalen ist erfindungsgemäß vorgesehen, dass in der ersten Gewirkelage lediglich die Zusatzfäden zumindest teilweise aufgeschmolzen sind und durch das zumindest teilweise Aufschmelzen eine Versteifung der ersten Gewirkelage bewirken.

Selbstverständlich bezieht sich die vorliegende Erfindung auf ein Abstandsgewirke, bei dem die Zusatzfäden zunächst aufgeschmolzen und dann wieder durch ein Abkühlen verfestigt sind.

Das Aufschmelzen führt zu einer deutlich erkennbaren Strukturveränderung der Zusatzfäden. Entlang der einzelnen Zusatzfäden ist das Aufschmelzen und nachfolgende Erstarren insbesondere durch eine ungleichmäßige Struktur zu erkennen. Sofern gemäß einer bevorzugten Ausgestaltung der Erfindung die Zusatzfäden aus einem eine Vielzahl von Filamenten aufweisenden Multifilamentgarn gebildet sind, sind die Filamente zumindest teilweise miteinander verschmolzen.

Während ein solches Multifilamentgarn zunächst sehr leicht verarbeitet und abgewinkelt werden kann, wird dann durch ein Verschmelzen der einzelnen Filamente eine steife Struktur nach Art eines Stranges mit einem gegenüber den einzelnen Filamenten erhöhten Durchmesser erzeugt.

Erfindungsgemäß bleibt aber trotz des Aufschmelzens die Struktur von einzelnen Fäden erhalten, auch wenn diese miteinander verschmolzen sind. Mit anderen Worten sind die Zusatzfäden im Nachhinein dann noch ohne Weiteres identifizierbar.

Erfindungsgemäß wird die Maschenstruktur von den Maschenfäden aufrecht gehalten. Die Gefahr eines Strukturverlustes bei einer ungenauen Verfahrensführung, insbesondere bei einem zu starken Erwärmen des Abstandsgewirkes, ist damit erheblich verringert.

Durch die Dicke, Menge und das Material der Zusatzfäden kann der Grad der Versteifung genau eingestellt werden.

Da die Maschenfäden selbst nicht aufgeschmolzen werden, wird zwar eine Versteifung erreicht, jedoch bleiben die Maschenfäden in ihrer Struktur erhalten. Im Gegensatz zu einem vollständigen Aufschmelzen sämtlicher Fäden der ersten Gewirkelage bleibt ein gewisser weicher, textilartiger Charakter erhalten.

Durch das zumindest teilweise Aufschmelzen der Zusatzfäden wird das Abstandsgewirke zwar in der Ebene stabilisiert, allerdings wird das Material gleichzeitig nicht zu hart, wobei auch bei einer Verformung des Abstandsgewirkes auftretende Geräusche, wie beispielsweise ein Knistern verhindert oder zumindest weitgehend verhindert werden können.

Hinsichtlich der Versteifung der ersten Gewirkelage und damit auch des gesamten Abstandsgewirkes können unterschiedliche Effekte jeweils für sich oder vorzugsweise in Kombination zueinander beitragen.

So ist es insbesondere möglich, dass in der ersten Gewirkelage die Maschenfäden zwar selbst nicht aufgeschmolzen sind, durch die zumindest teilweise aufgeschmolzenen Zusatzfäden aber miteinander verklebt werden. Die Struktur der Maschenfäden bleibt dann an sich erhalten, wobei jedoch eine gewisse Fixierung durch die aufgeschmolzenen Zusatzfäden erfolgt. Die aufgeschmolzenen Zusatzfäden können dabei sowohl durch eine stoffschlüssige Verbindung als auch einen gewissen Formschluss zu einer Fixierung beitragen.

Erfindungsgemäß kann die Versteifung zusätzlich darauf zurückgeführt werden, dass die Zusatzfäden aus einem eine Vielzahl von Filamenten aufweisenden Multifilamentgarn gebildet sind, wobei die Filamante zumindest teilweise miteinander verschmolzen sind.

Vorzugsweise sind auch die Maschenfäden aus Multiflamentgarn gebildet, so dass dann einerseits eine relativ weiche Struktur resultiert, wobei andererseits der thermoplastische Kunststoff der aufgeschmolzenen Zusatzfäden auch in einem gewissen Maße zwischen die selbst nicht aufgeschmolzenen Filamente der Maschenfäden eindringen kann.

Wie zuvor beschrieben, kann durch das kontrollierte Aufschmelzen lediglich der Zusatzfäden eine kontrollierte Versteifung der ersten Gewirkelage und bei einer entsprechenden Ausgestaltung gegebenenfalls auch der zweiten Gewirkelage erreicht werden.

Ein weiterer Vorteil ist darin zu sehen, dass bei einem Zuschneiden des Abstandsgewirkes durch die zusätzliche Fixierung aufgrund der zumindest teilweise aufgeschmolzenen Zusatzfäden keine oder zumindest weniger Bruchstücke freigesetzt werden. Eine Verschmutzung der Umgebung bei einem Zuschneiden wird damit vermieden oder zumindest deutlich reduziert, wobei aber auch die erste Gewirkelage weiterhin einen relativ weichen Charakter beibehält.

Insbesondere vor diesem Hintergrund kann im Rahmen der Erfindung auch vorgesehen sein, dass ebenfalls die zweite Gewirkelage maschenbildende Maschenfäden aus thermoplastischem Kunststoff und nicht maschenbildende Zusatzfäden aus thermoplastischem Kunststoff aufweist, wobei in der zweiten Gewirkelage lediglich die Zusatzfäden zumindest teilweise aufgeschmolzen sind und durch das zumindest teilweise Aufschmelzen eine Versteifung der zweiten Gewirkelage bewirken.

Die Zusatzfäden in der ersten und optional auch in der zweiten Gewirkelage können als Teilschuss eingebunden sein. Als Teilschuss wird dabei im Rahmen der Erfindung ein Faden bezeichnet, der bei dem Wirkprozess in Querrichtung über mehrere Nadeln geführt wird, ohne selbst Maschen zu bilden. Ein solcher Teilschuss läuft also in der Draufsicht in einer Zick-Zack-Form in Produktionsrichtung.

Je nach Herstellungsprozess und Wirkmaschine können die Zusatzfäden aber auch als Vollschuss eingearbeitet werden, so dass diese dann in den einzelnen Maschenreihen genau senkrecht zur Produktionsrichtung verlaufen. Schließlich können die Zusatzfäden auch als im Wesentlichen gerade in Produktionsrichtung laufende Stehfäden oder auch als Futterfäden eingearbeitet werden, wobei grundsätzlich auch verschiedene Ausführungen von Zusatzfäden in einer Gewirkelage kombiniert werden können, beispielsweise um eine Art Gitter zu bilden.

Um zu erreichen, dass bei der Herstellung des Abstandsgewirkes lediglich die Zusatzfäden zumindest teilweise aufgeschmolzen werden, können die Zusatzfäden aus einem ersten thermoplastischen Polymer und die Maschenfäden aus einem zweiten thermoplastischen Polymer gebildet werden, wobei das erste thermoplastische Polymer eine geringere Schmelz- oder Erweichungstemperatur als das zweite thermoplastische Polymer aufweist.

Bei thermoplastischen Kunststoffen ist zu beachten, dass häufig die Schmelz- oder Erweichungstemperatur nicht genau angegeben werden kann, weil kein eindeutiger Phasenübergang vorliegt. Zumindest äußert sich der beschriebene Temperaturunterschied darin, dass bei einer geeigneten Temperatur das zumindest teilweise Aufschmelzen der Zusatzfäden eine wahrnehmbare Strukturveränderung bewirkt, während die Maschenfäden keine oder keine wesentliche wahrnehmbare Strukturveränderung aufweisen.

Lediglich ein herkömmliches Ausrüsten des Materials, bei dem die Maschenfäden nicht aufgeschmolzen, sondern nur in ihrer Form unter der Reduzierung rückstellender Eigenschaften fixiert werden, wird nicht als eine Strukturveränderung im Rahmen der Erfindung verstanden.

Alternativ zu einer gleichmäßigen Erwärmung des Abstandsgewirkes zur gezielten Aufschmelzung der Zusatzfäden kann auch vorgesehen sein, dass die Zusatzfäden eingestrahlte Energie, beispielsweise in Form von Infrarot- oder Mikrowellenstrahlung, stärker absorbieren, so dass gezielt nur die Zusatzfäden stark aufgewärmt werden. Die Zusatzfäden können dazu auch eine die Absorption entsprechender Strahlung erhöhende Beimischung aufweisen. Bei der Aufwärmung mittels Infrarot kann beispielsweise bereits eine dunkele Einfärbung der Zusatzfäden ausreichend sein, um gezielt eine stärke Erwärmung zu erreichen.

Gemäß einer bevorzugten Ausgestaltung der Erfindung ist vorgesehen, dass die zumindest eine Gewirkelage von mehreren Maschen gebildete Öffnungen aufweist. Die Öffnungen ermöglichen eine besonders offene, luftdurchlässige Struktur, wobei die Öffnungen häufig in etwa eine Wabenform aufweisen. Gewirkelagen mit einer entsprechenden Struktur sind beispielsweise aus der DE 10 2008 020 287 C5 bekannt.

Des Weiteren können zwischen den Gewirkelagen Kanäle gebildet sein, welche frei von Abstandsfäden sind. Derartige Kanäle verbessern die Luftdurchlässigkeit und können je nach Anwendungsfall auch als eine Art Sollbruchstelle vorgesehen werden. Während bei herkömmlichen Abstandsgewirken die freibleibenden Kanäle eine Schwachstelle darstellen und das Material dort leicht kollabieren kann, kann gerade durch das zumindest teilweise Aufschmelzen der Zusatzfäden eine gewisse Stabilisierung im Bereich der Kanäle erfolgen.

Auch bei einer punktuellen Belastung kollabieren die Kanäle weniger stark, weshalb die Versteifung zumindest der ersten Gewirkelage und gegebenenfalls auch der zweiten Gewirkelage eine Verteilung der erwirkenden Kräfte auf eine größere Fläche ermöglicht.

Das Abstandsgewirke kann beispielsweise für die Unterpolsterung eines Fahrzeugsitzes, einer Matratze oder dergleichen eingesetzt werden.

Wie zuvor erläutert, kann der Grad der Versteifung durch die Materialauswahl, den Anteil sowie das Wirkmuster der Zusatzfäden bestimmt werden. Vorzugsweise besteht die erste Gewirkelage und bei einer entsprechenden Ausgestaltung auch die zweite Gewirkelage hauptsächlich aus den Maschenfäden. Insbesondere kann das Gewichtsverhältnis sämtlicher Zusatzfäden der ersten Gewirkelage zu sämtlichen Maschenfäden der ersten Gewirkelage zwischen 1:1 und 1:10, insbesondere 1:2 und 1:8 liegen.

Wie zuvor erläutert, wird für die Zusatzfäden vorzugsweise ein Multifilamentgarn eingesetzt, wobei dann die Filamente zweckmäßigerweise aus einem einheitlichen Polymer-Material bestehen. Grundsätzlich ist es aber auch denkbar, ein Bikomponenten-Monofilamentgarn oder -Multifilamentgarn einzusetzen, wobei ein Multifilamentgarn des Weiteren auch Filamente unterschiedlicher Zusammensetzung aufweisen kann. Es ist dann möglich, dass bei einer geeigneten Materialauswahl nur eine der verschiedenen Polymerkomponenten aufschmilzt, während die andere Polymerkomponente die Aufrechterhaltung der Struktur der Zusatzfäden sicherstellen kann, so dass auch ein völliges Zerfließen der Zusatzfäden stets vermieden wird.

Für die Maschenfäden können verschiedene Legemuster vorgesehen sein. Beispielsweise können die Maschenfäden in einer Fransenlegung angeordnet sein, wobei auch weitere Legemuster wie beispielsweise Trikot, Tuch, Köper, Atlas oder dergleichen in Betracht kommen.

Als Material des Abstandsgewirkes kann beispielsweise Polyester vorgesehen sein. Insbesondere ist gemäß einer bevorzugten Ausgestaltung der Erfindung vorgesehen, dass die Maschenfäden und die Zusatzfäden der ersten Gewirkelage und gegebenenfalls auch der zweiten Gewirkelage aus unterschiedlichen Typen von Polyester, insbesondere Polyethylenterephthalat (PET), gebildet sind, wobei durch die zuvor beschriebenen Maßnahmen bei der Herstellung erreicht wird, dass nur die Zusatzfäden aufgeschmolzen und nachfolgend wieder verfestigt werden.

Bei dem Wirkprozess werden mit mehreren Nadelreihen mit jeweils einer Vielzahl parallel geführter Fäden die erste Gewirkelage, die zweite Gewirkelage und die Abstandsfäden dazwischen gebildet, wobei in Produktionsrichtung verlaufende Maschenstäbchen oder Kettstränge und in Produktionsrichtung aufeinander folgende, in Querrichtung verlaufende Maschenreihen gebildet werden.

Gemäß einer bevorzugten Ausgestaltung der Erfindung sind zumindest entlang der Produktionsrichtung Kanäle vorgesehen, die auf besonders einfache Weise durch das Weglassen von Abstandsfäden erzeugt werden können. Insbesondere können die Kanäle in einem gleichmäßigen Raster jeweils durch Weglassen zumindest eines in Produktionsrichtung verlaufenden Abstandsfaden gebildet sein. So ist es beispielsweise möglich, jeden zweiten, jeden dritten, jeden vierten oder jeden fünften Abstandsfaden wegzulassen, um dort einen Kanal zu erzeugen. Zusätzlich oder alternativ können auch in Querrichtung dadurch Kanäle gebildet werden, dass die Abstandsfäden an voneinander beabstandeten Maschenreihen, vorzugsweise auch in einem gleichmäßigen Raster, in einer der beiden Gewirkelagen in Produktionsrichtung geführt werden.

Die Anordnung der Längs- oder Querkanäle in einem festen Raster mit einem einheitlichen Abstand zwischen den Kanälen und einer einheitlichen Kanalbreite ist aber nicht zwingend.

So ist es sowohl bei Längskanälen als auch bei Querkanälen ohne weiteres möglich, die Breite der Kanäle und den Abstand von Kanal zu Kanal zu variieren. Um bei Längskanälen beispielsweise eine vergrößerte Kanalbreite zu erzeugen, können zwei oder mehr in Querrichtung aufeinander folgende Abstandsfäden weggelassen werden. Der Abstand zwischen zwei Längskanälen ergibt sich dagegen aus der Anzahl der dazwischen angeordneten Abstandsfäden. Durch eine solche Variation besteht zunächst die Möglichkeit, die mechanischen Eigenschaften des Abstandsgewirkes noch genauer einstellen zu können. Darüber hinaus besteht auch die Möglichkeit, das Abstandsgewirke noch genauer an seinen späteren Anwendungszweck anpassen zu können. So ist es beispielsweise denkbar, dass in Teilbereichen des Abstandsgewirkes eine größere Härte und in anderen Teilbereichen eine größere Belüftung von Vorteil ist, wobei diese Anforderungen durch eine angepasste Anordnung und Ausgestaltung der Kanäle erfüllt werden können. Gegebenenfalls ist dann bei dem Abtrennen einzelner Abschnitte aus dem Abstandsgewirke ein Rapport und/ eine Ausrichtung zu berücksichtigen.

Entsprechend kann die Kanalbreite sowie der Abstand zwischen zwei aufeinander folgenden Kanälen in Querrichtung bei Längskanälen nahezu beliebig variieren. Das Gleiche gilt für die Ausbildung von Querkanälen. Grundsätzlich ist aber auch eine über eine gewisse Laufweite in Querrichtung bzw. Längsrichtung wiederkehrende Folge einer variierenden Kanalbreite bzw. eines variierenden Kanalabstandes möglich.

Die vorliegende Erfindung bezieht sich vorzugsweise auf ein Abstandsgewirke, bei dem die erste Gewirkelage von jeweils mehreren Maschen gebildete Öffnungen aufweist. Bei dem Wirkprozess werden in Produktionsrichtung nacheinander und in Querrichtung entlang der Maschenreihen fortlaufend aufeinander folgende Maschen gebildet. Die Öffnungen stellen dabei eine Strukturierung dar, die sich zumindest in Produktionsrichtung über mehrere Maschen erstreckt.

Auch die zweite Gewirkelage kann in einer bevorzugten Ausgestaltung der Erfindung Öffnungen aufweisen.

Die Öffnungen der ersten Gewirkelage und der zweiten Gewirkelage sind durch ein Ausrüsten des Abstandsgewirkes, das heißt durch ein Ausrichten des Abstandsgewirkes unter Zug und unter der Zuführung von Wärme derart angeordnet, dass in einer Draufsicht auf das Abstandsgewirke die Öffnungen der ersten Gewirkelage und die Öffnungen der zweiten Gewirkelage übereinander oder vorzugsweise versetzt zueinander angeordnet sind.

Im Rahmen der Erfindung kann vorgesehen sein, dass die Zusatzfäden unmittelbar an den Produktionsprozess aufgeschmolzen werden, so dass ähnlich wie bei einem üblichen Ausrüst-Vorgang eine Erwärmung erfolgt. Durch eine gezielte Erwärmung der Zusatzfäden und/oder durch einen niedrigen Schmelzpunkt unterhalb der für das Ausrüsten vorgesehenen Temperatur wird aber dann das Aufschmelzen erreicht. Im Rahmen einer solchen Ausgestaltung ergibt sich dann vorzugsweise über die gesamte Fläche des Abstandsgewirkes hinsichtlich der Zusatzfäden eine im Wesentlichen einheitliche Struktur.

Es ist aber auch möglich, das Aufschmelzen der Zusatzfäden erst später zu bewirken oder durch eine geeignete Temperatureinwirkung die Zusatzfäden erneut Aufzuschmelzen, um die Form des Abstandsgewirkes zu verändern.

So ist es beispielsweise möglich, bei einer ersten Erwärmung zum Aufschmelzen der Zusatzfäden oder bei einem erneuten Aufschmelzen der Zusatzfäden das Abstandsgewirke bzw. einen Abschnitt des Abstandsgewirkes in eine Form einzubringen, in der eine dreidimensionale Form vorgegeben wird. Es ergeben sich dann auch die zuvor im Zusammenhang mit der Dimensionsstabilität des Abstandsgewirkes beschriebenen Vorteile. Durch die zumindest teilweise aufgeschmolzenen Zusatzfäden kann nach einem Erkalten und einer Entnahme aus einer Form die vorgegebene dreidimensionale Struktur aufrechterhalten werden. Dennoch bleibt das Abstandsgewirke aber insgesamt verhältnismäßig weich und ist auch noch in einem gewissen Maße biegsam. Die zumindest teilweise aufgeschmolzenen Zusatzfäden bilden dann eine Art Grundstruktur innerhalb des an sich weichen und elastischen Abstandsgewirkes, welche die dreidimensionale Form vorgibt. Durch die Bereitstellung des Abstandsgewirkes als einheitlichem vergleichsweise einfach gebildeten Material kommen so gleichzeitig eine gute Formbarkeit als auch relativ weiche und elastische Eigenschaften miteinander kombiniert werden. Unabhängig davon, ob das Aufschmelzen der Zusatzfäden bei einem ebenen Abstandsgewirke oder innerhalb einer Form erfolgt, bleibt das Material noch relativ flexibel und ist insbesondere auch noch biegsam, so dass bei der weiteren Verarbeitung eine Formanpassung verfolgen kann. Beispielsweise kann das erfindungsgemäße Abstandsgewirke auch in einer S-Form angeordnet werden.

Im Rahmen der Erfindung kann die gesamte erste Gewirkelage und gegebenenfalls auch die zweite Gewirkelage vollständig aus den maschenbildenden Maschenfäden und den nicht maschenbildenden Zusatzfäden gebildet sein. Im Rahmen einer alternativen Ausgestaltung ist es jedoch auch möglich nicht maschenbildende Reißfäden als einen dritten Fadentyp vorzusehen. Die Integration von nicht maschenbildenden Reißfäden ist insbesondere dann zweckmäßig, wenn zwischen den Gewirkelagen Kanäle gebildet sind, die frei von Abstandsfäden sind. Bei zumindest einem Teil der Kanäle können dann die maschenbildenden Reißfäden vorgesehen sein, wodurch dann die entsprechende Gewirkelage entlang der entsprechenden Kanäle durch ein Zerreißen der Reißfäden aufgetrennt werden kann. Wenn gemäß einer bevorzugten Ausgestaltung der Erfindung in beiden Gewirkelagen an einem Teil der Kanäle jeweils Reißfäden vorgesehen sind, kann das Abstandsgewirke leicht in Streifen gerissen werden, wodurch eine Breite Materialbahn des Abstandsgewirkes leicht in kleine Stücke in einer vorgegebenen Breite zertrennt werden kann.

Zu diesem Zweck verlaufen die Reißfäden bevorzugt an den entsprechenden Kanälen als einzige Verbindung zwischen benachbarten Maschenstäbchen der maschenbildenden Maschenfäden in einem Zick-Zack.

Die nicht maschenbildenden Zusatzfäden und die nicht maschenbildenden Reißfäden können in einem gleichen Legemuster verarbeitet werden. Es ist dann bei dem Herstellungsprozess lediglich zu gewährleisten, dass an den gewünschten Trennstellen der nicht maschenbildende Zusatzfaden durch einen Reißfaden ersetzt ist.

Der Reißfaden weist zweckmäßigerweise eine geringe Feinheit auf, wozu als Reißfaden insbesondere dünne Multifilamentgarne geeignet sind.

Die Erfindung wird im Folgenden anhand einer lediglich ein Ausführungsbeispiel darstellenden Zeichnung erläutert. Es zeigen:
- Fig. 1: einen Abschnitt eines Abstandsgewirkes in einer Draufsicht,
- Fig. 2: lediglich eine erste Gewirkelage des Abstandsgewirkes in einer Draufsicht,
- Fig. 3: eine Variante des Abstandsgewirkes gemäß Fig. 1 in einer abstrahierten Darstellung.

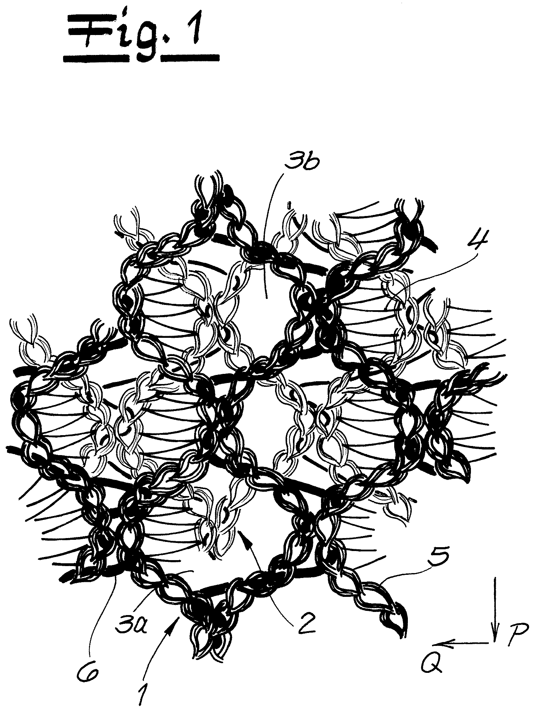

Die Fig. 1 zeigt in einer Draufsicht ein Abstandsgewirke mit einer in der Darstellung oben liegenden ersten flächigen Gewirkelage 1 und einer darunter angeordneten zweiten Gewirkelage 2.

Sowohl die erste Gewirkelage 1 als auch die zweite Gewirkelage 2 weisen jeweils Öffnungen 3a, 3b auf, die beim Wirkprozess jeweils durch mehrere Maschen gebildet sind. In der Fig. 1 ist zu erkennen, dass die erste Gewirkelage 1 und die zweite Gewirkelage 2 durch Abstandsfäden 4 miteinander verbunden sind.

Bei der Herstellung des Abstandsgewirkes werden in einer Produktionsrichtung P fortlaufend in Querrichtung Q verlaufende Maschenreihen gebildet.

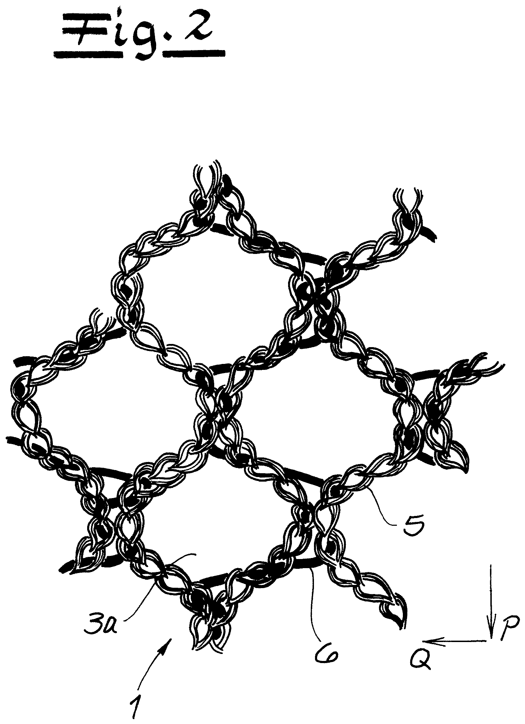

Die Fig. 2 zeigt im Detail die erste Gewirkelage 1, wobei zur besseren Erkennbarkeit die zweite Gewirkelage 2 und die Abstandsfäden 4 nicht dargestellt sind. Insbesondere können im Rahmen der Erfindung die erste Gewirkelage 1 und die zweite Gewirkelage 2 gleich oder im Wesentlichen gleich ausgeführt sein.

Aus der Fig. 2 ist zu erkennen, dass die erste Gewirkelage 1 und damit vorzugsweise auch die zweite Gewirkelage 2 einerseits maschenbildende Maschenfäden 5 und andererseits nicht maschenbildende Zusatzfäden 6 aufweist.

Die Zusatzfäden 6 sind zur besseren Erkennbarkeit dicker dargestellt, wobei dies in der Praxis jedoch nicht mit der tatsächlichen Fadendicke entsprechen muss.

Erfindungsgemäß sind die Zusatzfäden 6 teilweise aufgeschmolzen und wieder verfestigt, wodurch die erste Gewirkelage 1 versteift ist.

Die Zusatzfäden 6 werden von Multifilamentgarnen gebildet, wobei die einzelnen Filamente dann bei dem zumindest teilweise erfolgenden Aufschmelzen miteinander verbunden werden können. Darüber hinaus können die aufgeschmolzenen Zusatzfäden 6 auch die Maschenfäden 5 in einem gewissen Maße verkleben und fixieren. Die Maschenfäden 5 behalten dennoch ihre ursprüngliche Struktur, so dass die erste Gewirkelage 1 zwar versteift aber nicht vollständig hart wird.

Sowohl das Verschmelzen der einzelnen Filamente der Zusatzfäden 6 miteinander sowie ein gewisses Verkleben der Maschenfäden 5 können zu einer Versteifung der ersten Gewirkelage 1 und bei einer entsprechenden Ausgestaltung auch der zweiten Gewirkelage 2 beitragen.

Bei einer Verarbeitung des Abstandsgewirkes ergibt sich eine geringe Dehnung in Produktionsrichtung P sowie in Querrichtung Q, so dass die Verarbeitung erleichtert wird. Auch einzelne Bruchstücke der Abstandsfäden 4 oder der Maschenfäden 5 können in einem gewissen Maße durch die aufgeschmolzenen Zusatzfäden 6 fixiert werden, so dass derartige Bruchstücke bei einem Zuschneiden des Abstandsgewirkes nicht freigegeben werden.

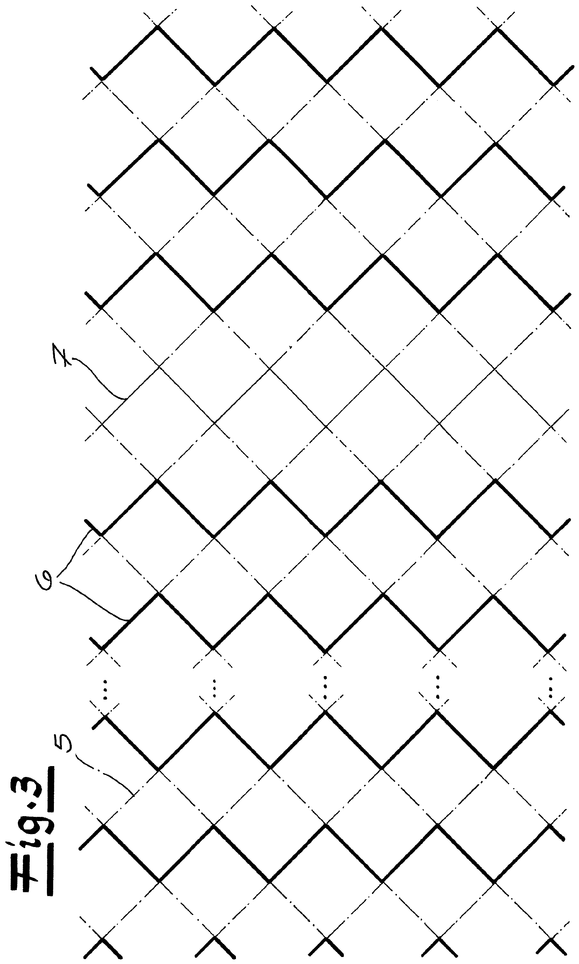

Die Fig. 3 zeigt eine Variante des in Fig. 1 dargestellten Abstandsgewirkes in einer abstrahierten Darstellung. Gemäß der Fig. 1 ist die erste Gewirkelage und optional auch die zweite Gewirkelage aus den maschenbildenden Maschenfäden 5 und den nicht maschenbildenden Zusatzfäden 6 gebildet. Die Fig. 3 zeigt nun davon ausgehend eine Variante, bei der ausgehend von einer gleichmäßigen Anordnung der nicht maschenbildenden Zusatzfäden 6 einzelne Zusatzfäden 6 in einem vorgegebenen Muster entlang der Querrichtung Q durch nicht maschenbildende Reißfäden 7 versetzt sind. An den nicht maschenbildenden Reißfäden 7 kann dann die erste Gewirkelage 1 leicht aufgetrennt werden. Die nicht maschenbilden Reißfäden 7 sind im Unterschied zu den nicht maschenbildenden Zusatzfäden 6 nicht aufgeschmolzen und weisen eine geringere Reißfestigkeit auf. Zweckmäßigerweise ist in beiden Gewirkelagen 1, 2 in gleicher Position in Querrichtung übereinander jeweils ein nicht maschenbildender Reißfaden 7 vorgesehen.

Besonders bevorzugt verlaufen die nicht maschenbildende Reißfäden 7 dann an einen in Längsrichtung verlaufenden Kanal, an dem auch die Abstandsfäden 4 ausgespart sind. Das gesamte Abstandsgewirke kann dann entlang dieser Kanäle in Streifen zerrissen werden.

## Patentansprüche

1. Abstandsgewirke mit einer ersten und einer zweiten flächigen Gewirkelage (1, 2), die durch eingewirkte Abstandsfäden (4) miteinander verbunden sind, wobei die erste Gewirkelage (1) maschenbildende Maschenfäden (5) aus thermoplastischem Kunststoff und nicht maschenbildende Zusatzfäden (6) aus thermoplastischem Kunststoff aufweist, **dadurch gekennzeichnet, dass** in der ersten Gewirkelage (1) lediglich die Zusatzfäden (6) zumindest teilweise aufgeschmolzen sind und durch das zumindest teilweise Aufschmelzen sowie nachfolgendes Abkühlen und Erstarren eine Versteifung der ersten Gewirkelage (1) bewirken, wobei die Zusatzfäden (6) aus einem eine Vielzahl von Filamenten aufweisenden Multifilamentgarn gebildet sind, wobei die Filamente zumindest teilweise miteinander verschmolzen sind.

2. Abstandsgewirke nach Anspruch 1, **dadurch gekennzeichnet, dass** in der ersten Gewirkelage (1) die Maschenfäden (5) durch die zumindest teilweise aufgeschmolzenen Zusatzfäden (6) miteinander verklebt sind.

3. Abstandsgewirke nach Anspruch 1 oder 2, **dadurch gekennzeichnet, dass** auch die zweite Gewirkelage (2) maschenbildende Maschenfäden (5) aus thermoplastischem Kunststoff und nicht maschenbildende Zusatzfäden (6) aus thermoplastischem Kunststoff aufweist, wobei in der zweiten Gewirkelage (2) lediglich die Zusatzfäden (6) zumindest teilweise aufgeschmolzen sind und durch das zumindest teilweise Aufschmelzen eine Versteifung der zweiten Gewirkelage (2) bewirken.

4. Abstandsgewirke nach einem der Ansprüche 1 bis 3, **dadurch gekennzeichnet, dass** die Zusatzfäden (6) als Durchschuss, Teilschuss, Futterfaden oder Stehfaden in die jeweilige Gewirkelage (1, 2) eingebunden sind.

5. Abstandsgewirke nach einem der Ansprüche 1 bis 4, **dadurch gekennzeichnet, dass** die Zusatzfäden (6) aus einem ersten thermoplastischen Polymer und die Maschenfäden (5) aus einem zweiten thermoplastischen Polymer gebildet sind, wobei das erste thermoplastische Polymer eine geringere Schmelz- oder Erweichungstemperatur als das zweite thermoplastische Polymer aufweist.

6. Abstandsgewirke nach einem der Ansprüche 1 bis 5, **dadurch gekennzeichnet, dass** zumindest eine der Gewirkelagen (1, 2) von mehreren Maschen gebildete Öffnungen aufweist.

7. Abstandsgewirke nach einem der Ansprüche 1 bis 6, **dadurch gekennzeichnet, dass** zwischen den Gewirkelagen (1, 2) Kanäle gebildet sind, welche frei von Abstandsfäden sind.

8. Abstandsgewirke nach einem der Ansprüche 1 bis 7, **dadurch gekennzeichnet, dass** in der ersten Gewirkelage (1) das Gewichtsverhältnis der Zusatzfäden (6) zu den Maschenfäden (5) zwischen 1:1 und 1:10 liegt.

9. Abstandsgewirke nach einem der Ansprüche 1 bis 8, **dadurch gekennzeichnet, dass** die Maschenfäden (5) und die Zusatzfäden (6) der ersten Gewirkelage (1) aus unterschiedlichen Typen von Polyester, insbesondere Polyethylenterephthalat (PET), gebildet sind.

10. Abstandsgewirke nach einem der Ansprüche 1 bis 9, **dadurch gekennzeichnet, dass** die erste Gewirkelage (1) neben den maschenbildenden Fäden (5) und dem nicht maschenbildenden Zusatzfäden (6) nicht maschenbildende Reißfäden (7) aufweist.

11. Abstandsgewirke nach Anspruch 7 und 10, **dadurch gekennzeichnet, dass** an zumindest einem Teil der Kanäle die nicht maschenbildenden Reißfäden (7) vorgesehen sind, so dass das Abstandsgewirke entlang der entsprechenden Kanäle in Stücke reißbar ist.

## Claims

1. A spacing knitted fabric comprising a first and a second flat knitted fabric layer (1, 2), which are connected to one another by means of knitted-in spacing threads (4), wherein the first knitted fabric (1) has mesh-forming loop threads (5) made of thermoplastic plastic and non-mesh-forming additional threads (6) made of thermoplastic plastic, **characterized in that** in the first knitted fabric layer (1) only the additional threads (6) are at least partially melted and effect a reinforcement of the first knitted fabric layer (1) by means of the at least partial melting as well as subsequent cool-down and solidifying, wherein the additional threads (6) are formed from a multi-filament yarn having a plurality of filaments, wherein the filaments are at least partially melted together.

2. The spacing knitted fabric according to claim 1, **characterized in that** in the first knitted fabric layer (1), the loop threads (5) are adhered to one another by means of the at least partially melted additional threads (6).

3. The spacing knitted fabric according to claim 1 or 2, **characterized in that** the second knitted fabric layer (2) also has mesh-forming loop threads (5) made of thermoplastic plastic and non-mesh-forming additional threads (6) made of thermoplastic plastic, wherein in the second knitted fabric layer (2) only the additional threads (6) are at least partially melted and effect a reinforcement of the second knitted fabric layer (2) by means of the at least partial melting.

4. The spacing knitted fabric according to one of claims 1 to 3, **characterized in that** the additional threads (6) are integrated into the respective knitted fabric layer (1, 2) as weft, partial weft, lay-in thread, or filler thread.

5. The spacing knitted fabric according to one of claims 1 to 4, **characterized in that** the additional threads (6) are formed from a first thermoplastic polymer, and the loop threads (5) are formed from a second thermoplastic polymer, wherein the first thermoplastic polymer has a lower melting or softening temperature than the second thermoplastic polymer.

6. The spacing knitted fabric according to one of claims 1 to 5, **characterized in that** at least one of the knitted fabric layers (1, 2) has openings by from several loops.

7. The spacing knitted fabric according to one of claims 1 to 6, **characterized in that** channels, which are free from spacing threads, are formed between the knitted fabric layers (1, 2).

8. The spacing knitted fabric according to one of claims 1 to 7, **characterized in that** in the first knitted fabric layer (1) the weight ratio of the additional threads (6) to the loop threads (5) is between 1:1 and 1:10.

9. The spacing knitted fabric according to one of claims 1 to 8, **characterized in that** the loop threads (5) and the additional threads (6) of the first knitted fabric layer (1) are formed from different types of polyester, in particular polyethylene terephthalate (PET).

10. The spacing knitted fabric according to one of claims 1 to 9, **characterized in that** in addition to the mesh-forming threads (5) and the non-mesh-forming additional threads (6), the first knitted fabric layer (1) has non-mesh-forming tearing threads (7).

11. The spacing knitted fabric according to one of claims 7 and 10, **characterized in that** the non-mesh-forming tearing threads (7) are provided at at least a part of the channels, so that the spacing knitted fabric can be torn into pieces along the corresponding channels.

## Revendications

1. Tricot d'espacement, comprenant une première et une deuxième couches de tricot (1, 2) planes, qui sont assemblées l'une à l'autre par des fils d'espacement (4) intégrés par tricotage, la première couche de tricot (1) comportant des fils de maillage (5) formant des mailles en une matière thermoplastique et des fils auxiliaires (6) ne formant pas de mailles en une matière thermoplastique, **caractérisé en ce que** dans la première couche de tricot (1), seuls les fils auxiliaires (6) sont au moins partiellement fondus et par la fusion au moins partielle et un refroidissement et une solidification consécutifs, provoquent une rigidification de la première couche de tricot (1), les fils auxiliaires (6) étant formés d'un fil multifilaments comportant une pluralité de filaments, les filaments étant fusionnés au moins en partie les uns avec les autres.

2. Tricot d'espacement selon la revendication 1, **caractérisé en ce que** dans la première couche de tricot (1), les fils de maillage (5) sont collés les uns avec les autres par les fils auxiliaires (6) au moins partiellement fondus.

3. Tricot d'espacement selon la revendication 1 ou 2, **caractérisé en ce qu'**également la deuxième couche de tricot (2) comporte des fils de maillage (5) formant des mailles en une matière thermoplastique et des fils auxiliaires (6) ne formant pas de mailles en une matière thermoplastique, dans la deuxième couche de tricot (2), seuls les fils auxiliaires (6) étant au moins partiellement fondus et par la fusion au moins partielle, provoquant une rigidification de la deuxième couche de tricot (2).

4. Tricot d'espacement selon l'une quelconque des revendications 1 à 3, **caractérisé en ce que** les fils auxiliaires (6) sont intégrés dans la couche de tricot (1, 2) concernée par trame insérée, trame partielle, fils d'envers ou fil fixe.

5. Tricot d'espacement selon l'une quelconque des revendications 1 à 4, **caractérisé en ce que** les fils auxiliaires (6) sont formés d'un premier polymère thermoplastique et les fils de maillage (5) sont formés d'un deuxième polymère thermoplastique, le premier polymère thermoplastique présentant une température de fusion ou température de ramollissement inférieure à celle du deuxième polymère thermoplastique.

6. Tricot d'espacement selon l'une quelconque des revendications 1 à 5, **caractérisé en ce qu'**au moins l'une des couches de tricot (1, 2) comporte des ouvertures formées par plusieurs mailles.

7. Tricot d'espacement selon l'une quelconque des revendications 1 à 6, **caractérisé en ce qu'**entre les couches de tricot (1, 2) sont formés des canaux qui sont exempts de fils d'espacement.

8. Tricot d'espacement selon l'une quelconque des revendications 1 à 7, **caractérisé en ce que** dans la première couche de tricot (1), le rapport en poids des fils auxiliaires (6) aux fils de maillage (5) se situe entre 1 : 1 et 1 : 10.

9. Tricot d'espacement selon l'une quelconque des revendications 1 à 8, **caractérisé en ce que** les fils de maillage (5) et les fils auxiliaires (6) de la première couche de tricot (1) sont formés de différents types de polyester, notamment de polytéréphtalate d'éthylène (PET).

10. Tricot d'espacement selon l'une quelconque des revendications 1 à 9, **caractérisé en ce que** la première couche de tricot (1) comporte, hormis les fils (5) formant des mailles et les fils auxiliaires (6) ne formant pas de mailles des fils de déchirure (7) ne formant pas de mailles.

11. Tricot d'espacement selon la revendication 7 et 10, **caractérisé en ce que** sur au moins une partie des canaux sont prévus les fils de déchirure (7) ne formant pas de mailles, de sorte que le tricot d'espacement puisse être déchiré en pièces le long des canaux correspondants.
